# EUROPEAN PATENT APPLICATION

(11) **EP 4 529 092 A1**
(43) Date of publication of application: **26.03.2025**
(21) Application number: 24201979.2
(22) Date of filing: 23.09.2024
(51) Int. Cl.: H04L 9/40, H04L 67/14

(54) **PREVENTING AN UNAUTHORIZED VIRTUAL MACHINE FROM ACCESSING A VIRTUAL PRIVATE NETWORK**

(30) Priority: 25.09.2023 IN 202311064271
(71) Applicant: F5, INC., Seattle, WA 98104 (US)
(72) Inventor: GOLI, Nihar, Seattle, 98104 (US)
(74) Representative: Savi, Massimiliano

(57) **Abstract**

Technologies related to preventing access to secure network resources by a virtual machine are disclosed. A client computing device that is connected to a virtual private network (VPN) can automatically disconnect from the VPN when a process associated with a virtual machine is detected on the client computing device. The client computing device can prompt a user to install and execute security policy compliance software on the virtual machine to determine whether it complies with a security policy. If the virtual machine complies with the security policy, the VPN connection can be re-enabled. If the virtual machine is not compliant, the client computing device can prevent the VPN connection from being re-enabled until the virtual machine is stopped or is brought into compliance.

## Description

### FIELD

This technology generally relates to the prevention of unauthorized access to virtual private networks.

### BACKGROUND

Virtual Private Networks, or VPNs, can enable computing devices to securely connect to one another over an insecure network. VPN protocols, such as the Internet Protocol Security (IPSec) protocol suite, Secure Socket Layer (SSL) VPN, and the Secure Socket Tunneling Protocol (SSTP) can be used to establish secure, encrypted connections between devices over the Internet. A VPN gateway device can be used to create a secure connection between a private network and remote devices using VPN protocols.

Virtual machine technology can enable a single computing device (sometimes referred to as a host computing device) to run one or more virtual machines (sometimes referred to as guests). Some virtual machine software can create virtualized computing environments that emulate hardware required by guest operating systems. The guests can operate in isolation from one another and can be unaware that they are running on virtualized hardware rather than physical hardware.

### BRIEF SUMMARY

An example embodiment comprises a network traffic management system that comprises one or more network traffic management apparatuses, server devices, or client devices. The network traffic management system can implement a method that comprises establishing a connection from a computing device to a virtual private network; detecting a start of a process associated with a virtual machine on the computing device; and in response to the detecting the start of the process associated with the virtual machine, disabling the connection from the computing device to the virtual private network.

In another example embodiment, a system comprises one or more network traffic management modules, networking modules, or server modules, memory comprising programmed instructions stored thereon, and one or more processors configured to be capable of executing the stored programmed instructions to: establish a connection from a computing device to a virtual private network; detect a start of a process associated with a virtual machine on the computing device; and in response to the detection of the start of the process associated with the virtual machine, disable the connection from the computing device to the virtual private network.

Another example embodiment comprises a non-transitory computer readable medium having stored thereon instructions comprising executable code that, when executed by one or more processors, causes the processors to: establish a connection from a computing device to a virtual private network; detect a start of a process associated with a virtual machine on the computing device; and in response to the detection of the start of the process associated with the virtual machine, disable the connection from the computing device to the virtual private network.

Another example embodiment comprises a network traffic management apparatus, comprising memory comprising programmed instructions stored thereon and one or more processors configured to be capable of executing the stored programmed instructions to: establish a connection from a computing device to a virtual private network; detect a start of a process associated with a virtual machine on the computing device; and in response to the detection of the start of the process associated with the virtual machine, disable the connection from the computing device to the virtual private network.

### BRIEF DESCRIPTION OF THE DRAWINGS

FIG. 1 is a flowchart of an example method for preventing an unauthorized virtual machine from accessing a virtual private network.
FIG. 2 is a block diagram of an example network traffic management apparatus for preventing an unauthorized virtual machine from accessing a virtual private network.
FIG. 3 is a flowchart of an example method for determining whether a virtual machine is authorized to access a virtual private network.
FIG. 4 is a system diagram of an example system for preventing an unauthorized virtual machine from accessing a server computer via a virtual private network tunnel.
FIG. 5 is a block diagram of an example client-server architecture including a client computing device for preventing an unauthorized virtual machine from accessing one or more server computers via a virtual private network.
FIG. 6 is a block diagram of an example computing environment.

### DETAILED DESCRIPTION

Some virtual private network (VPN) technology utilizes an edge client that is required in order to establish a connection to a VPN. The edge client can be configured to analyze a client computing device to ensure that it is compliant with a specified security policy before allowing the client computing device to establish a connection to the VPN. However, in some cases, virtual machines and other virtualized computing technologies can be used to circumvent the security policy of a VPN. For example, a user of a computing device that complies with a VPN security policy can establish a connection from the computing device to the VPN. The user can then start a virtual machine on the computing device that is not compliant with the security policy and use the non-compliant virtual machine to access the VPN. This can present several risks to the security of resources connected to the VPN, such as data leakage, malware propagation, introduction of network vulnerabilities, resource drain, and legal violations.

At least some of the technologies disclosed herein can be used to address these problems. For example, a client computing device can establish a connection to a virtual private network (VPN). Upon the detection of a start of a process associated with a virtual machine on the client computing device, the connection from the client computing device to the VPN can be disabled. In some embodiments, an edge client installed on the client computing device can be used to establish the VPN connection, detect the start of the process associated with the virtual machine, and disable the VPN connection in response to the detection.

In some embodiments, the user of the client computing device can be prompted to execute a compliance process on the virtual machine. This compliance process can be configured to verify whether the virtual machine complies with a given security policy. The compliance process can transmit a signal that indicates whether the virtual machine is in compliance with the security policy. The client computing device can detect the signal from the compliance process and, based on the signal, can determine whether the virtual machine complies with the security policy. If the virtual machine is found to comply with the security policy, the connection from the computing device to the VPN can be re-enabled. If the virtual machine is found to not comply with the security policy, the client computing device can prevent the connection to the VPN from being re-enabled. The VPN connection can be re-established once the virtual machine is brought into compliance with the security policy. In a different or further embodiment, upon detecting a termination of the process associated with the virtual machine, the connection from the computing device to the VPN can be re-enabled.

In some embodiments, prompting the user to execute the compliance process comprises prompting the user to install security policy enforcement software on the virtual machine. The re-enabling of the connection from the computing device to the VPN can also depend on a determination that the security policy enforcement software is installed on the virtual machine.

In some embodiments, a secure virtual channel is established with the compliance process. The signal from the compliance process can be received via this secure virtual channel. Such a virtual channel can be used to protect the communications with the compliance process from tampering by other processes running on the virtual machine or natively on the client computing device.

Although the embodiments described herein refer to virtual machines, the technologies described herein can also be applied to other virtualized computing technologies, such as virtualization containers. For example, a start of a virtualization container can be detected and, based on the detection, a connection to a VPN can be disabled. A compliance process can be executed within the virtualized container to determine whether the container complies with a security policy. If the container complies with the security policy, then the connection to the VPN can be re-enabled. If the container does not comply, then re-enablement of the VPN connection can be prevented until the container is brought into compliance or is terminated.

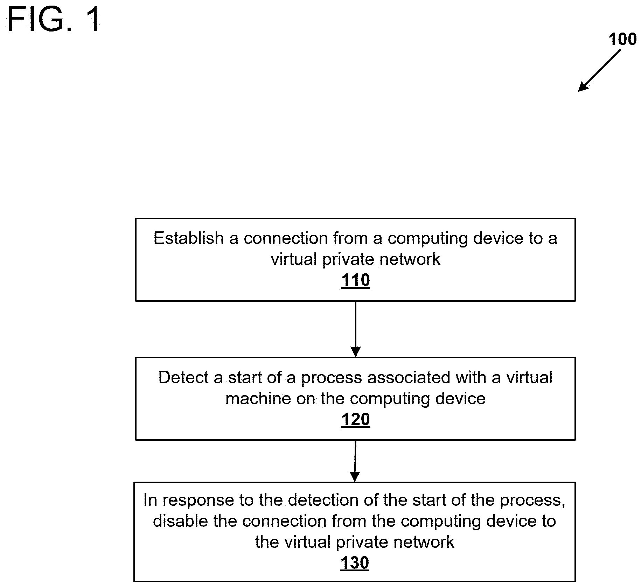

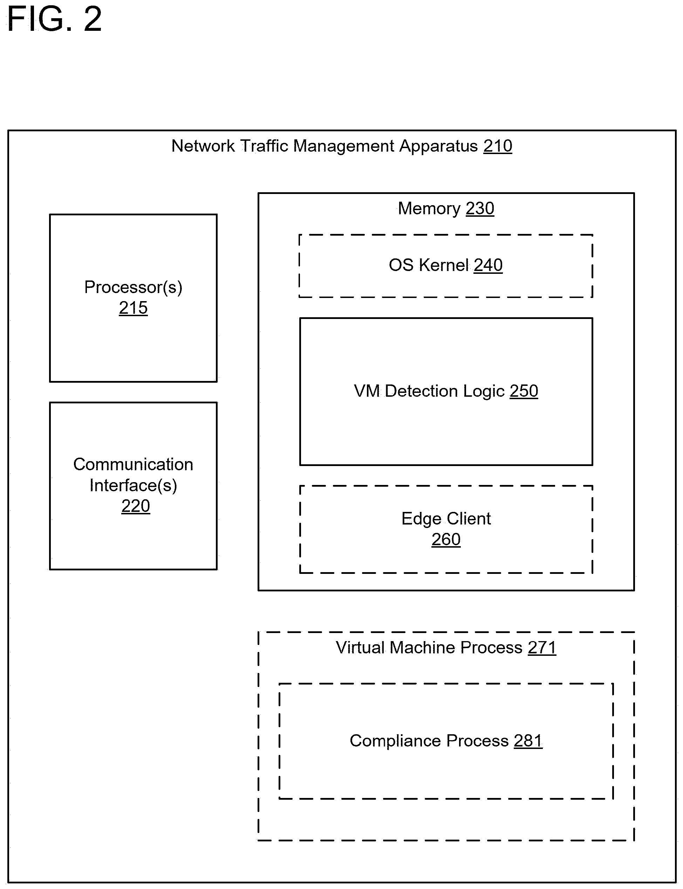

FIG. 1 is a flowchart of an example method 100 for preventing an unauthorized virtual machine from accessing a virtual private network. Any of the example systems and apparatuses described herein can be used to perform all or part of the example method 100. For example, the network traffic management apparatus 210, depicted in FIG. 2, can be used to perform all or part of the example method 100.

FIG. 2 is a block diagram of an example network traffic management apparatus 210 for preventing an unauthorized virtual machine from accessing a virtual private network. The network traffic management apparatus 210 comprises one or more processors 215, one or more communication interfaces 220, and a memory 230 that comprises virtual machine detection logic 250. Optionally, the memory 230 can comprise an operating system kernel 240 and/or a virtual private network edge client 260. The edge client 260 can be configured to establish a secure connection to a virtual private network over one or more of the communication interfaces 220. The network traffic management apparatus 210 can be implemented using a computing environment as described in more detail with reference to FIG. 7.

Referring to FIG. 1, at 110, a connection is established from a computing device to a virtual private network (VPN). For example, the network traffic management apparatus 210 can use one or more of the communication interfaces 220 to establish a connection to a VPN. This can be achieved, for example, by using secure protocols such as Internet Protocol Security (IPSec), Transport Layer Security (TLS), Secure Socket Layer (SSL), and/or the Secure Socket Tunneling Protocol (SSTP) to establish a secure and private connection over a less secure network, such as the Internet or a public local area network. The network traffic management apparatus 210 can use the VPN connection to access secure network resources that would not be accessible by the apparatus 210 without the VPN connection.

At 120, a start of a process associated with a virtual machine is detected on the computing device. For example, the network traffic management apparatus 210 can detect virtual machine processes using the virtual machine detection logic 250. The virtual machine detection logic 250 can be configured to monitor and detect a start of a process associated with a virtual machine on the computing device, such as virtual machine process 271. For example, the virtual machine process 271 can be a process configured to run a virtual machine.

The virtual machine process can be detected using a variety of mechanisms. For example, event listeners can be used to detect the launch of a virtual machine process. Event listeners can be configured to monitor specific system events within a computing device (such as events generated by an operating system of the computing device). Such an event can be generated when a new process starts. When an operating system (e.g., 240) starts a virtual machine process (e.g., 271), it can generate an event that the virtual machine detection logic 250 can be configured to listen for and react to.

Additionally or alternatively, polling can be used to detect the process associated with the virtual machine. For example, the virtual machine detection logic 250 can periodically check for virtual machines running on the network traffic management apparatus 210. In a particular embodiment, the virtual machine detection logic 250 can periodically query a virtual machine management process running on the network traffic management apparatus 210 to determine when a virtual machine's status has changed from a non-running state to a running state.

In at least some embodiments, the virtual machine detection logic 250 can be integrated with a virtual machine management application in a way that allows the virtual machine management application to send a signal to the virtual machine detection logic 250 when a virtual machine is started. For example, the virtual machine detection logic 250 can interface with a hypervisor running on the network traffic management apparatus that manages processes running virtual machines (e.g., 271). The hypervisor can be configured to create, run, and manage virtual machines on the network traffic management apparatus 210. By interfacing with such a hypervisor, the virtual machine detection logic 250 can, in at least some cases, receive real-time information about the state of virtual machine processes (e.g., 271), including when they start.

At 130, in response to detecting the start of the process associated with the virtual machine, the connection from the computing device to the VPN is disabled. For example, after the virtual machine detection logic 250 detects the start of the virtual machine process 271, it can disable the connection to the VPN over the one or more communication interfaces 220. Disabling the connection could comprise terminating the secure session, blocking data transfer, or another method that prevents communication by the computing device with other device over the VPN.

In at least some embodiments, the network traffic management apparatus 210 can comprise an edge client 260 that can be configured to establish and disable the connection between the network traffic management apparatus 210 and the VPN. For example, access to the VPN can be restricted to a secure connection established by the edge client 260, and the edge client 260 can be configured to disable the connection to the VPN when the process 271 is detected. Additionally, the edge client 260 can prevent the connection to the VPN from being re-enabled after it has been disabled. For example, the edge client 260 can be configured to refuse to initiate a connection handshake process to connect to the VPN without approval from the virtual machine detection logic 250. Additionally or alternatively, the edge client 260 can be configured to ignore instructions to create a connection to the VPN while the virtual machine process 271 is running. Additionally or alternatively, the edge client 260 can be configured to change an access control policy for the network traffic management apparatus 210. If the virtual machine detection logic 250 detects the virtual machine process 271, the edge client 260 can change the access control policy to prevent the connection to the VPN from being re-enabled.

In some cases, the connection to the VPN can be re-enabled once the process associated with the virtual machine is terminated. For example, the edge client 260, the virtual machine detection logic 250, and/or another component of the network traffic management apparatus 210 can detect a termination of the process 271 associated with a virtual machine. In response to detecting the termination of the process 271, the edge client 260, the virtual machine detection logic 250, and/or another component of the network traffic management apparatus 210 can re-enable the connection to the VPN (or allow the connection to the VPN to be re-enabled).

Additionally or alternatively, the connection to the VPN can be re-enabled if it is determined that the virtual machine is authorized to access the VPN.

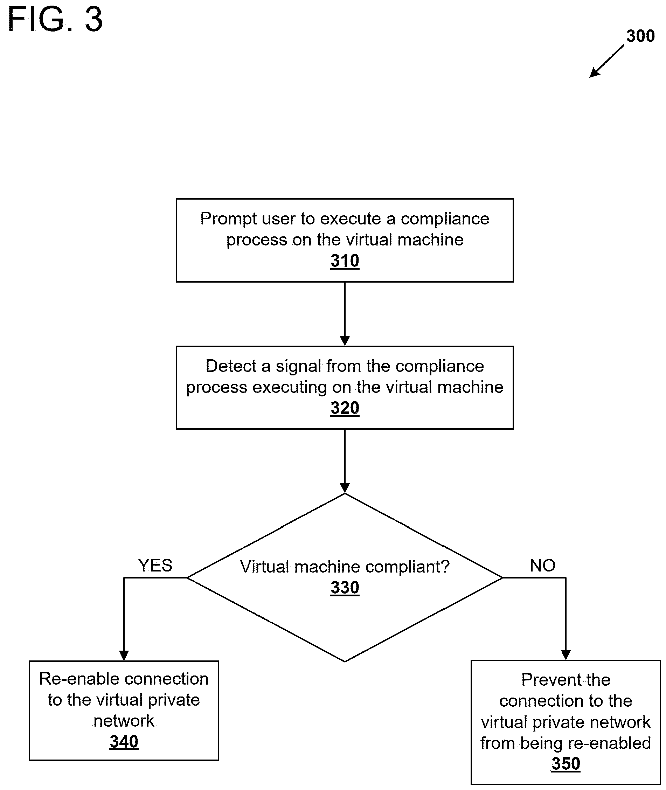

FIG. 3 is a flowchart of an example method 300 for determining whether a virtual machine is authorized to access a virtual private network (VPN). Any of the example systems and apparatuses described herein can be used to perform all or part of the example method 300. For example, the network traffic management apparatus 210 depicted in FIG. 2, can be used to perform all or part of the example method 300.

At 310, a user is prompted to execute a compliance process on a virtual machine that has been detected. For example, after detecting the process 271 associated with a virtual machine, the network traffic management apparatus 210 can prompt a user of the network traffic management apparatus 210 to execute a compliance process 281 in a virtual machine running in the virtual machine process 271. The prompt can be presented to the user via a graphical user interface (not shown) or a command line interface (not shown) of the network traffic management apparatus 210.

In some embodiments, prompting the user of the computing device to execute the compliance process can comprise prompting the user to install security policy enforcement software on the virtual machine and running the security policy enforcement software to execute the compliance process. Executing the compliance process can comprise checking for the presence of certain security features, running security scans, or other checks that align with the security policy. For example, the compliance process 281 can be configured to determine a compliance status of a virtual machine running in the virtual machine process 271. Determining the compliance status can comprise checking various aspects of the virtual machine's configuration and state against a predefined security policy.

The security policy can define conditions that the virtual machine must meet in order to be considered safe to access the VPN. For example, the security policy can require that certain security software (such as antivirus and/or firewall programs) are installed and running on the virtual machine. Additionally or alternatively, it can require that certain software (such as know malware, viruses, etc.) are not installed on the virtual machine. Additionally or alternatively, it can mandate that certain settings (such as automatic update installation) are enabled or disabled, and/or that certain ports are open/closed. Other types of security policy settings or also possible, such as checking installed software versions, system settings, user account permissions, file system permissions, running services, network settings, etc. The compliance process 281 can also check for the presence of known security vulnerabilities. When the compliance process 281 executes, it can evaluate these, and possibly other, aspects of the virtual machine running in the virtual machine process 271.

At 320, a signal from the compliance process executing on the virtual machine is detected. The signal can comprise an indication of whether the virtual machine is in compliance with the security policy. Example signals include completion signals, status signals, data packages containing results of the compliance process, etc.

For example, the compliance process can transmit a signal to the virtual machine detection logic 250 and/or the edge client 260 that indicates whether or not the virtual machine running in the virtual machine process 271 is in compliance with the security policy. In a particular embodiment, the compliance process 281 can compile the results of its analysis into a report that is transmitted to the virtual machine detection logic 250 and/or the edge client 260. The report can indicate whether aspects of the security policy are met or not. For example, if the security policy requires that an approved antivirus program be installed and running on the virtual machine, but the compliance process 281 finds that no approved antivirus program is running (or is not installed), it could send a signal indicating this non-compliance.

At 330, it is determined, based on the signal from the compliance process, whether the virtual machine is in compliance with the security policy. For example, the virtual machine detection logic 250 or the edge client 260 can be configured to determine whether the virtual machine running in the virtual machine process 271 is compliant with the security policy. This determination could be made based on data received from the compliance process 281 and/or by further analysis performed by the virtual machine detection logic 250, the edge client 260, and/or another component of the network traffic management apparatus 210.

If all (or a sufficient number of) aspects of the policy are met, it can be determined that the virtual machine is in compliance with the security policy. Alternatively, if any (or a sufficient number of) aspects of the policy are not met, it can be determined that the virtual machine is not in compliance with the security policy.

If the virtual machine is found to be compliant with the security policy, then, at 340, the connection from the computing device to the VPN can be re-enabled. For example, the edge client 260 can re-establish a connection with the VPN via one or more of the communication interfaces 220 of the network traffic management apparatus 210. For example, the edge client 260 can initiate a secure connection handshake process via one or more of the communication interfaces 220 to re-establish the connection to the VPN. Additionally or alternatively, the edge client 260 can resume processing connection requests and/or re-configure a security policy to allow connections between the network traffic management apparatus 210 and the VPN to be established.

If the virtual machine is found to not be in compliance with the security policy, then, at 350, the connection between the computing device and the VPN is prevented from being re-enabled. For example, the VM detection logic 250, the edge client 260, or another component of the network traffic management apparatus 210 can prevent the connection between the network traffic management apparatus 210 and the VPN from being re-enabled as long as the virtual machine process 271 is running, or until the virtual machine running in the virtual machine process is brought into compliance with the security policy. For example, the edge client 260, the virtual machine detection logic 250, and/or another component of the network traffic management apparatus 210 can prevent a handshake process with the VPN from being established, ignore requests to establish connections with the VPN, and/or prevent a security policy from being changed to allow connections between the network traffic management apparatus 210 and the VPN.

In some embodiments, re-enabling the connection to the VPN can be based on a determining that security policy enforcement software is installed on the virtual machine. For example, the edge client 260 can require the compliance process 281 to be running on the virtual machine in the virtual machine process 271 before establishing the VPN connection. In some such embodiments, if the edge client 260 detects that the compliance process 281 is no longer running on the virtual machine (or has not run for longer than a specified timespan), it can re-disable the VPN connection and prevent it from being re-established until the compliance process is once again running on the virtual machine.

In some embodiments, communication with the compliance process can be secured by establishing a secure virtual channel with the compliance process and receiving the signal from the compliance process via the secure virtual channel. For example, the edge client 260 can securely communicate with the compliance process 281 using encryption and one or more secure communication protocols. For example, the edge client 260 can establish a secure channel of communication with the compliance process 281. This can be done using a secure communication protocol (such as a Transport Layer Security protocol). Using such a protocol, communication between the edge client 260 and the compliance process 281 can be secured and protected from tampering by other processes running on the virtual machine or the network traffic management apparatus 210.

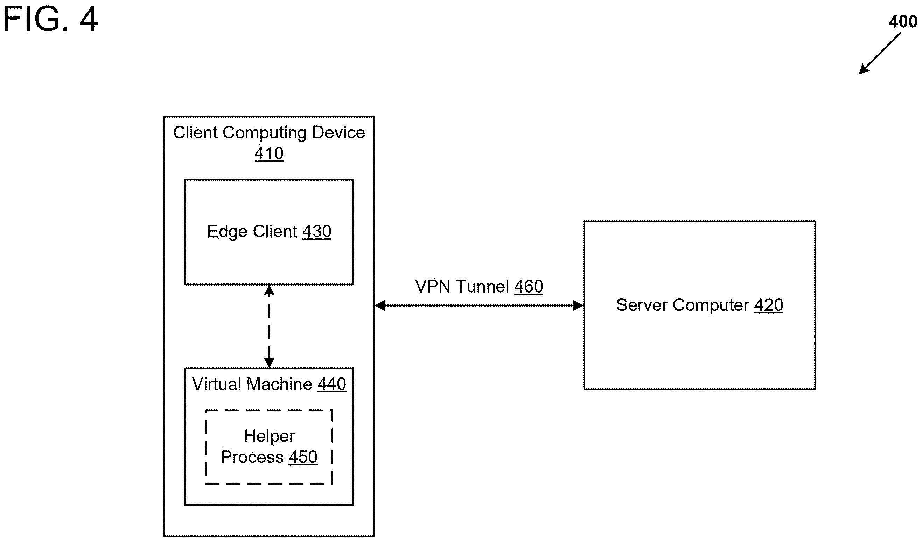

FIG. 4 is a system diagram of an example system 400 for preventing an unauthorized virtual machine 440 from accessing a server computer 420 via a virtual private network tunnel 460. The example system 400 can be used to perform all or part of any of the example methods described herein.

The example system 400 a client computing device 410 and a server computer 420. The client computing device 410 comprises a virtual private network (VPN) edge client 430 that is connected to the server computer 420 by a VPN tunnel 460.

The client computing device 410 can use the VPN tunnel 460 to establish a VPN connection with the server computer 420. The edge client 430 can be configured to manage the VPN tunnel and the connection to the server computer 420 (and any other secure network resources that the client computing device 410 can access via the VPN tunnel 460).

Upon detection of the start of the virtual machine 440 on the client computing device 410, the VPN tunnel between the client computing device 410 and the server computer 420 can be disabled. This detection can be performed by the edge client 430 or another component of the client computing device 410. Detecting the start of the virtual machine can comprise receiving a system event indicating that a process associated with a virtual machine has started. Additionally or alternatively, the edge client 430 can check periodically for processes running on the client computing device 410 that are associated with virtual machines. Additionally or alternatively, the edge client 430 can interface with a virtual machine management application (such as a hypervisor) to determine the status of any virtual machines running on the client computing device 410. Additionally or alternatively, a separate listener process (not shown) can be used to monitor the states of any virtual machines running on the client computing device 410.

Disabling the VPN tunnel 460 can comprise terminating a secure connection with the server computer 420 and preventing a handshake process from re-establishing the secure connection with the server computer 420. Additionally or alternatively, the edge client 430 can be configured to ignore requests to re-enable the secure connection with the server computer 420 and/or to reconfigure a security policy of the client computing device 410 to prevent the client computing device 410 from establishing a connection with a VPN to which the server computer 420 is connected.

The edge client 430 can prompt a user of the client computing device to execute a helper process 450 in the virtual machine 440. This helper process can comprise, for example, one or more executable scripts, and/or compiled software modules configured to assess the compliance the virtual machine 440 with a security policy.

Once the helper process 450 is running in the virtual machine 440, it can analyze the virtual machine to determine whether it is in compliance with the security policy. The analysis can comprise analyzing installed applications and their versions, system settings, user account permissions, file system permissions, running services, network settings, etc. Additionally or alternatively, the analysis can comprise checking for the presence of known security vulnerabilities in the virtual machine 440.

Once the helper process 450 has completed its analysis of the virtual machine 440, it can communicate its findings to the edge client 430. For example, the helper process 450 can transmit one or more signals to the edge client 430 that indicate whether the virtual machine 440 is in compliance with the security policy. In at least some embodiments, the one or more signals can be transmitted over a secure virtual channel that is established between the edge client 430 and the helper process 450.

Based on the one or more signals received from the helper process 450, the edge client 430 can determine whether the virtual machine 440 is compliant with the security policy. If the virtual machine 440 is found to be compliant, the edge client 430 can re-enable the VPN tunnel 460 to re-establish the secure connection between the client computing device 410 and the server computer 420. If the virtual machine 440 is not compliant, the edge client 430 can prevent the VPN tunnel 460 from being re-established.

In some embodiments, the edge client 430 can be configured to establish and manage a secure session with the server computer 420 via the VPN tunnel 460. The edge client 430 can establish the secure session by initiating a handshake process with the server computer 420. During this process, the edge client and the server can exchange credentials and negotiate a secure connection using encryption protocols. Once the handshake process is complete, data can be securely transmitted between the client computing device 410 to the server computer 420 through the VPN tunnel 460.

To disable the connection, the edge client 430 can terminate the secure session that it has established with the server computer 420. This can be done by sending a termination request to the server 420, which then acknowledges the request and closes the secure session. After the session is closed, data can no longer be transmitted securely through the VPN tunnel 460. To re-enable the connection, the edge client 430 can re-initiate the handshake process with the server computer 420 to establish a new secure session.

The edge client 430 can manage the secure connection with the server computer 421 based on instructions received from other components of the client computing device 410, such as when the start of the virtual machine 440 is detected. In some embodiments, the secure connection can be re-established once the virtual machine 440 is terminated or when it is determined that the virtual machine 440 is in compliance with the security policy.

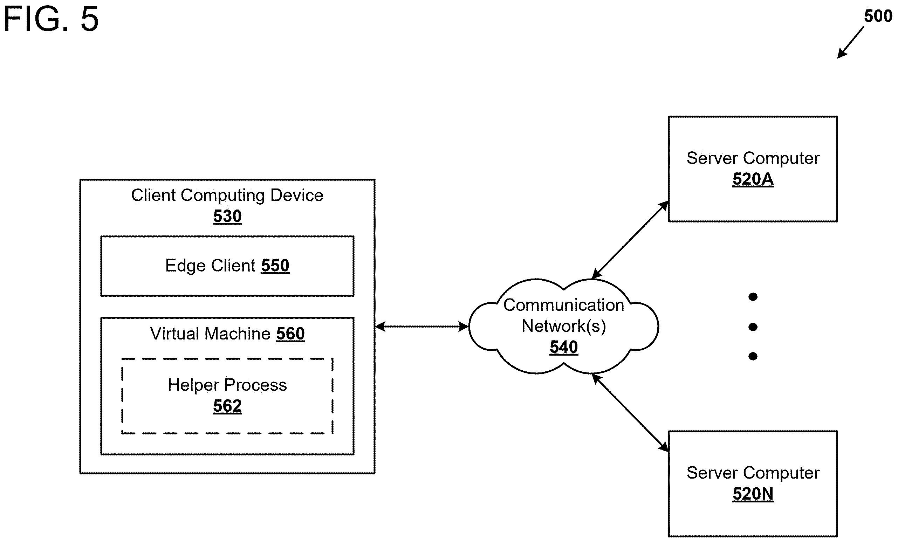

FIG. 5 illustrates an example client-server architecture 500 (also referred to as a network traffic management system) that comprises one or more client devices (such as client computing device 530) that are coupled to one or more server computers (such as server computers 520AN) via one or more communication networks (such as the communication networks 540). The server computers 520A-N can communicate with one or more additional server computer(s) that are accessible via the communication networks 540. As one example, the communication networks 540 can include a public network (e.g., the Internet) and devices attached to the public network can be accessed using public network addresses. In another example, the communication networks 540 can include a private network and devices attached to the private network can be accessed using private network addresses.

The communication networks 540 can include various wired and/or wireless communication technologies, such as a local area network (LAN), a wide area network (WAN), an intranet, the Internet, a public switched telephone network (PSTN), and so forth. The devices connected to the communication networks 540 can communicate with each other using various communications protocols, such as transmission control protocol with Internet protocol (TCP/IP) over Ethernet and/or other customized or industry-standard protocols. The communication protocols can be used to transmit information over the networks 540 using packet-based messages (e.g., Ethernet-based packet data networks) and/or other application programming interfaces (APIs). An API is a programmatic interface (e.g., a set of methods and/or protocols) for communicating among different modules. The communication networks 540 can include various network devices, such as switches (multilayer or single-layer), routers, repeaters, gateways, network bridges, hubs, protocol converters, bridge routers, proxy servers, firewalls, network address translators, multiplexers, network interface controllers, wireless network interface controllers, modems, line drivers, and wireless access points, for example. It should be appreciated by one of ordinary skill in the art having the benefit of the present disclosure, that the network topology illustrated in FIG. 5 has been simplified and that multiple networks and networking devices can be utilized to interconnect the various computing systems disclosed herein. Additionally, one or more of the devices of the client-server architecture 500 in these examples can be in a same or a different communication network including one or more public, private, or cloud networks, for example.

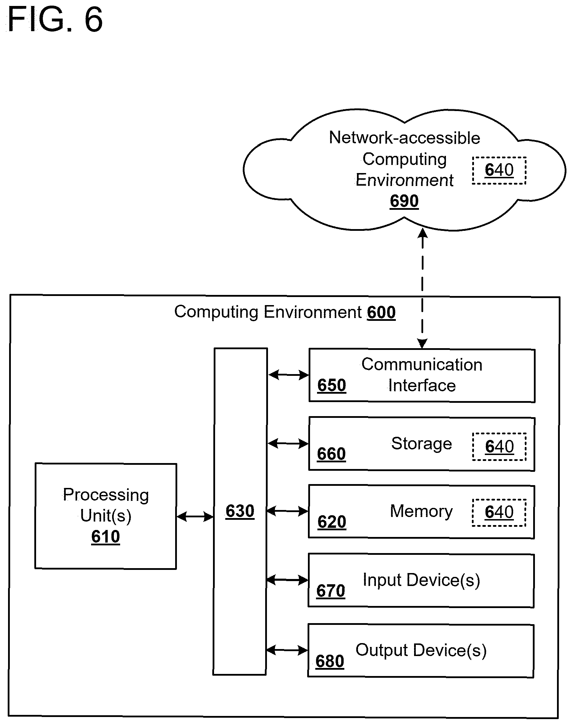

Generally, the server computers 520A-N and the client computing device 530, and the network traffic management system 500 can perform various computing tasks that are implemented using a computing environment, such as the computing environment described in more detail with respect to FIG. 6. The computing environment can include computer hardware, computer software, and combinations thereof. As a specific example, the computing environment can include general-purpose and/or special-purpose processor(s), configurable and/or hard-wired electronic circuitry, a communications interface, and computer-readable memory for storing computer-executable instructions to enable the processor(s) to perform a given computing task. The logic to perform a given task can be specified within a single module or interspersed among multiple modules. As used herein, the terms "module" and "component" can refer to an implementation within one or more dedicated hardware devices or apparatus (e.g., computer(s)), and/or an implementation within software hosted by one or more hardware devices or apparatus that may be hosting one or more other software applications or implementations.

The client computing device 530 can include any type of computing device that can exchange network data, such as mobile communication devices, laptop computers, desktop computers, tablet computers, virtual machines executing within a cloud-computer-based environment, and so forth. The client computing device 530 can run interface applications, such as web browsers or standalone client applications, which may provide an interface to communicate with (e.g., make requests for, and receive content stored on) one or more of the server computers 520A-N via the communication networks 540. The client computing device 530 can further include an output device (such as a display screen or touchscreen (not illustrated)) and/or an input device (such as a keyboard (not illustrated)). Additionally, the client computing device 530 can be configured to execute software code (e.g., JavaScript code within a web browser) in order to log client-side data and provide the logged data to the one or more of the server computers 520A-N, or another computing device, via the communication networks 540.

The server computers 520A-N can include any type of computing device that can exchange network data. For example, the server computers 520A-N can exchange network data with the client computing device 530 and with each other. As another example, the server computers 520A-N can exchange communications along communication paths specified by application logic in order to facilitate a client-server application interacting with the client computing device 530. Examples of the server computers 520A-N can include application servers, database servers, access control servers, and encryption servers. Accordingly, in some examples, one or more of the server computers 520A-N process login and other requests received from the client computing device 530 via the communication network(s) 540A and 540B according to the Hypertext Transfer Protocol (HTTP) or Hypertext Transfer Protocol Secure (HTTPS) application-layer protocol. A web application may be operating on one or more of the server computers 520A-N and transmitting data (e.g., files or web pages) to the client computing device 530 in response to requests from the client computing device 530. The server computers 520A-N can be hardware and/or software and may represent a system with multiple servers in a pool, which may include internal or external networks.

While the server computers 520A-N are illustrated as single devices, one or more actions of each of the server computers 520A-N may be distributed across one or more distinct network computing devices that together comprise one or more of the server computers 520A-N. Moreover, the server computers 520A-N are not limited to a particular configuration. Thus, the server computers 520A-N may contain network computing devices that operate using a coordinated approach, whereby one of the network computing devices of the server computers 520A-N operate to manage or otherwise coordinate operations of the other network computing devices. Each of the server computers 520A-N can operate as a networked computing device within a cluster architecture, a computing device within a peer-to peer architecture, a virtual machine, or a resource within a cloud-based computer architecture, for example. Thus, the technology disclosed herein is not to be construed as being limited to a single environment and other configurations and architectures are also envisaged.

Additionally, one or more of the components depicted in the client-server architecture 500, such as the server computers 520A-N, or client computing device 530, for example, may be configured to operate as virtual instances on the same physical machine. In other words, one or more of the server computers 520A-N, or client computing devices 530A-N may operate on the same physical device rather than as separate devices communicating through communication networks 540. Additionally, there may be more or fewer client computing devices, or server computers than illustrated in FIG. 5.

The example system 500 can be used to perform all or part of any of the example methods described herein. For example, the client computing device 530 can be used to prevent access to secure network resources by an unauthorized virtual machine as illustrated above with reference to FIGS. 1-4.

The client computing device 530 can comprise an edge client 550 and a virtual machine 560. The client computing device 530 can establish a virtual private network (VPN) connection with one or more of the server computers 520A-N over one or more of the communication networks 540. The connection can be established, for example, by the edge client 550. This could be initiated by the edge client 550 using one or more VPN protocols such as the Internet Protocol Security (IPsec) protocol suite, the Secure Socket Tunneling Protocol (SSTP), Secure Socket Layer (SSL) VPN, or the like.

When a process associated with the virtual machine 560 (for example, a process that will host and run the virtual machine 560) starts on the computing device 530, it can be detected by the edge client 550. Upon detection of the start of the process associated with the virtual machine 560, the edge client 550 can disable the VPN connection and prevent the VPN connection from being re-established while the process associated with the virtual machine 560 is running.

In at least some embodiments, the edge client 550 can prompt a user of the client computing device 530 to execute a helper process 562 in the virtual machine 560. This could be done through a user interface of the client computing device 530 (such as a graphical user interface, a command line interface, etc.). Prompting the user to execute the helper process 562 can comprise prompting the user to install security policy enforcement software on the virtual machine 560. The helper process 562 can be executed by running the security policy enforcement software on the virtual machine 560.

The helper process 562 can analyze the virtual machine 560 and determine whether the virtual machine 560 is in compliance with a defined security policy. The helper process 562 can transmit a signal to the edge client 550 (or another component of the client computing device 530) that indicates whether the virtual machine 560 complies with the security policy. If the virtual machine complies with the security policy, the edge client 550 can re-enable the VPN connection. If the virtual machine does not comply with the security policy, then the edge client can prevent the VPN connection from being re-enabled until the process associated with the virtual machine 560 is stopped or the virtual machine is brought into compliance with the security policy.

FIG. 6 illustrates a block diagram of a generalized example of a suitable computing environment 600 that can be used to implement the examples, techniques, and technologies described herein. For example, the computing environment 600 can be used to implement a computing device that performs operations for preventing access to secure network resources by an unauthorized virtual machine as described herein.

The computing environment 600 includes at least one processing unit 610 and computer-readable memory 620, which are coupled together by an interconnect 630. The processing unit 610 executes computer-executable instructions. The processing unit 610 can include a general-purpose processor, a special-purpose processor, and combinations thereof. For example, the processing unit 610 can include a general-purpose central processing unit (CPU), a graphics processor, a processor in an application-specific integrated circuit (ASIC), a processor configured to operate using programmable logic (such as in a field-programmable gate array (FPGA)), and/or any other type of processor. In a multi-processing system, multiple processing units can be used to execute computer-executable instructions to increase processing power.

The memory 620 stores software 640 implementing one or more innovations described herein, in the form of computer-executable instructions suitable for execution by the processing unit 610. Specifically, the memory 620 can be used to store computer-executable instructions, data structures, input data, output data, and other information. The memory 620 can include volatile memory (e.g., registers, cache, random-access memory (RAM), non-volatile memory (e.g., read-only memory (ROM), electrically erasable programmable ROM (EEPROM), and flash memory), and/or combinations thereof. The memory 620 can include operating system software (not illustrated). Operating system software can provide an operating environment for other software executing in the computing environment 600 and can coordinate activities of the components of the computing environment 600.

The interconnect 630 is used to connect different components of the computing environment 600 together so that the processing unit 610 can communicate with the different components and/or so that the different components can communicate with each other. For example, the interconnect 630 can include a bus, controller, and/or a network. As one example, the interconnect 630 can include a host bridge (also referred to as a northbridge) for connecting the processing unit 610 to relatively high-speed components (such as the memory 620) and an input/output bridge (also referred to as a southbridge) for connecting to relatively lower-speed components (such as a communications interface 650) within the computing environment 600. In some examples, one or more components of the computing environment 600 can be integrated within or connected directly to the processing unit 610.

The computing environment 600 can include a communication interface 650 for communicating with another computing entity using a communication medium (e.g., a physical layer). The communication interface 650 can implement all or a portion of a network protocol stack. The network protocol stack defines communication formats and rules for communicating between different devices connected to a network. For example, the network protocol stack can define modular layers for communication using the Open Systems Interconnection (OSI) model or another model (such as the Internet Protocol Suite). The OSI model standardizes and partitions a communication system into seven layers including a physical layer (referred to as layer 1) and an application layer (referred to as layer 7). The application layer can be used to define how applications access the communications subsystem. The physical layer defines the electrical and physical specifications for communication over a communication medium (also referred to as a physical transmission medium). The communication medium can be used to convey information, such as computer-executable instructions or other data, in a modulated data signal. A modulated data signal is a signal that has one or more of its characteristics adjusted in such a manner as to encode information in the signal. The communication interface 650 can include electronic and/or optical circuitry to receive and transmit communications signals that are encoded (e.g., according to a physical layer specification of the network stack) using an electrical, optical, radio frequency (RF), or another carrier signal. Accordingly, the communication interface 650 can be used to communicate over wired connections (e.g., twisted-wire pair, coaxial cable, and fiber optic connections) and/or wireless technologies (e.g., Bluetooth, Wi-Fi (IEEE 802.11), and cellular).

The computing environment 600 can include storage 660 that is used to store instructions for the software 640, data structures, and data, which can be used to implement the technologies described herein. The storage 660 can include electronic circuitry for reading and/or writing to removable or non-removable storage media using magnetic, optical, or other reading and writing system that is coupled to the processor. The storage 660 can include read-only storage media and/or readable and writeable storage media, such as magnetic disks, solid state drives, magnetic tapes or cassettes, CD-ROMs, CD-RWs, DVDs, or any other medium which can be used to store information and that can be accessed within the computing environment 600.

The computing environment 600 can include input device(s) 670. For example, the input device(s) 670 can provide an input interface to a user of the computing environment 600 and/or to receive inputs from a physical environment. The input device(s) 670 can include a tactile input device (e.g., a keyboard, a mouse, or a touchscreen), a microphone, a camera, a sensor, or another device that provides input to the computing environment 600.

The computing environment 600 can include output device(s) 680. For example, the output device(s) 680 can provide an output interface to a user of the computing environment 600 and/or to generate an output observable in a physical environment. The output device(s) 680 can include a light-emitting diode, a display, a printer, a speaker, a CD-writer, or another device that provides output from the computing environment 600. In some examples, the input device(s) 670 and the output device(s) 680 can be used together to provide a user interface to a user of the computing environment 600.

The computing environment 600 is not intended to suggest limitations as to scope of use or functionality of the technology, as the technology can be implemented in diverse general-purpose and/or special-purpose computing environments. For example, the disclosed technology can be practiced in a local, distributed, and/or network-enabled computing environment. In distributed computing environments, tasks are performed by multiple processing devices. Accordingly, principles and advantages of distributed processing, such as redundancy, parallelization, and replication also can be implemented, as desired, to increase the robustness and performance of the devices and systems of the examples. The examples may also be implemented on computer system(s) that extend across any suitable network using any suitable interface mechanisms and traffic technologies, including by way of example only, wireless traffic networks, cellular traffic networks, Packet Data Networks (PDNs), the Internet, intranets, and combinations thereof. As a specific example, a distributed computing environment can include the processing unit 610 and the network-accessible computing environment 690 that is linked through a communications network. In a distributed computing environment, program modules 640 (including executable instructions for performing operations as described herein) can be located in both local and remote memory storage devices.

The term computer-readable media includes non-transient media for data storage, such as memory 620 and storage 660, and does not include transmission media such as modulated data signals and carrier waves. Any of the disclosed methods can be implemented as computer-executable instructions stored on one or more computer-readable media and executed on a computer (e.g., any commercially available computer). Any of the computer-executable instructions for implementing the disclosed techniques as well as any data structures and data created and used during implementation of the disclosed embodiments can be stored on one or more computer-readable storage media. For example, the computer-executable instructions can be part of a dedicated software application or a software application that is accessed or downloaded via a web browser or other software application (such as a remote computing application). Such software can be executed, for example, on a single local computer (e.g., any suitable commercially available computer) or in a network environment (e.g., via the Internet, a wide-area network, a local-area network, a client-server network, or other such network) using one or more network-attached computers.

This disclosure is set forth in the context of representative examples that are not intended to be limiting. Accordingly, this disclosure is directed toward all novel and non-obvious features and aspects of the various disclosed examples, alone and in various combinations and subcombinations with one another. Many variations of the specific hardware and software used to implement the examples are possible, as will be appreciated by those skilled in the relevant art with the benefit of this disclosure. The disclosed systems, methods, and apparatus are not limited to any specific aspect or feature or combinations thereof, nor does the disclosed technology require that any one or more specific advantages be present, or problems be solved. Theories of operation, scientific principles, or other theoretical descriptions presented herein in reference to the disclosed technology have been provided for the purposes of better understanding and are not intended to be limiting in scope. The apparatus and methods in the appended claims are not limited to those apparatus and methods that function in the manner described by such theories of operation.

As used in this application the singular forms "a," "an," and "the" include the plural forms unless the context clearly dictates otherwise. The term "coupled" encompasses mechanical, electrical, magnetic, optical, as well as other practical ways of coupling or linking items together and does not exclude the presence of intermediate elements between the coupled items. The term "and/or" means any one item or combination of items in the phrase.

The recited order of processing elements or sequences, or the use of numbers, letters, or other designations therefore is not intended to limit the claimed processes to any order. Although the operations of some of the disclosed methods are described in a particular, sequential order for convenient presentation, it should be understood that this manner of description encompasses rearrangement, unless a particular ordering is required by specific claim language set forth below. For example, operations described sequentially may in some cases be rearranged or performed concurrently. Moreover, for the sake of simplicity, the attached figures may not show all the various ways in which the disclosed methods can be used in conjunction with other methods.

It should also be well understood that any software functionality described herein can be performed, at least in part, by one or more hardware logic components, instead of software. For example, and without limitation, illustrative types of hardware logic components that can be used include field-programmable gate arrays (FPGAs), application-specific integrated circuits (ASICs), application-specific standard products (ASSPs), system-on-a-chip systems (SOCs), complex programmable logic devices (CPLDs), and so forth.

For clarity, only certain selected aspects of the software-based implementations are described. Other details that are well known in the art are omitted. For example, it should be understood that the disclosed technology is not limited to any specific computer language or program. For instance, the disclosed technology can be implemented by software written in C, C++, Java, assembly language, or any other suitable programming language. Likewise, the disclosed technology is not limited to any particular computer or type of hardware. Certain details of suitable computers and hardware are well known and need not be set forth in detail in this disclosure.

Having thus described many possible embodiments to which the principles of the invention may be applied, it will be recognized by those skilled in the art that the foregoing detailed disclosure is intended to be presented by way of example only and is not limiting. Various alterations, improvements, and modifications will occur and are intended to those skilled in the art, though not expressly stated herein. These alterations, improvements, and modifications are intended to be suggested hereby, and are within the spirit and scope of the invention. Accordingly, the scope of the claimed subject matter is defined by the following claims. We therefore claim as our invention all that comes within the scope of these claims.

## Claims

1. A method implemented by a network traffic management system comprising one or more network traffic management apparatuses, server devices, or client devices, the method comprising:
establishing a connection from a computing device to a virtual private network;
detecting a start of a process associated with a virtual machine on the computing device; and
in response to the detecting the start of the process associated with the virtual machine, disabling the connection from the computing device to the virtual private network.

2. The method of claim 1, further comprising:
prompting a user of the computing device to execute a compliance process on the virtual machine;
detecting a signal from the compliance process executing on the virtual machine;
determining, based on the signal from the compliance process, that the virtual machine complies with a security policy; and
re-enabling the connection from the computing device to the virtual private network based on the determining that the virtual machine complies with the security policy.

3. The method of claim 2, wherein:
prompting the user of the computing device to execute the compliance process comprises prompting the user to install security policy enforcement software on the virtual machine; and
the re-enabling the connection from the computing device to the virtual private network is further based on a determining that the security policy enforcement software is installed on the virtual machine.

4. The method of claim 2, further comprising:
establishing a secure virtual channel with the compliance process; and
receiving the signal from the compliance process via the secure virtual channel.

5. The method of claim 1, further comprising:
detecting a termination of the process associated with the virtual machine; and
in response to the detecting the termination of the process associated with the virtual machine, re-enabling the connection from the computing device to the virtual private network.

6. A system comprising one or more network traffic management modules, networking modules, or server modules, memory comprising programmed instructions stored thereon, and one or more processors configured to be capable of executing the stored programmed instructions to carry out the steps of the method according to one or more of the claims from 1 to 5.

7. A non-transitory computer readable medium having stored thereon instructions comprising executable code that, when executed by one or more processors, causes the processors to carry out the steps of the method according to one or more of the claims from 1 to 5.

8. A network traffic management apparatus, comprising memory comprising programmed instructions stored thereon and one or more processors configured to be capable of executing the stored programmed instructions to carry out the steps of the method according to one or more of the claims from 1 to 5.
